# EUROPÄISCHE PATENTSCHRIFT

(11) **EP 3 025 893 B1**
(45) Veröffentlichungstag und Bekanntmachung des Hinweises auf die Patenterteilung: **01.03.2017**
(21) Anmeldenummer: 14195241.6
(22) Anmeldetag: 27.11.2014
(51) Int. Cl.: B60K 15/04

(54) **VORRICHTUNG ZUM SCHUTZ VOR FEHLBETANKUNG**
DEVICE FOR PROTECTING AGAINST INCORRECT FUELLING
DISPOSITIF DE PROTECTION CONTRE LES ERREURS DE REMPLISSAGE DE RÉSERVOIR

(43) Veröffentlichungstag der Anmeldung: 01.06.2016
(73) Patentinhaber: Magna Steyr Fuel Systems GesmbH, 8261 Sinabelkirchen (AT)
(72) Erfinder: Hendler, René, 8020 Graz (AT); Steinmann, Dominik, 8223 Stubenberg (AT)
(74) Vertreter: Zangger, Bernd

(56) Entgegenhaltungen:
- EP-A1- 1 262 357
- EP-A1- 2 061 670
- DE-A1-102011 114 824
- GB-A- 2 422 144

## Beschreibung

### Gebiet der Erfindung

Die vorliegende Erfindung betrifft eine Vorrichtung zum Schutz vor Fehlbetankung, insbesondere eines mit Diesel-Kraftstoff betriebenen Kraftfahrzeugs.

### Stand der Technik

Je nach Motorentyp benötigen Kraftfahrzeuge unterschiedliche Kraftstoffe, wobei eine Betankung des Kraftfahrzeugs mit einem nicht geeigneten Kraftstoff zu enormen Schäden des Kraftfahrzeugs führen kann.

Herkömmliche Kraftfahrzeuge werden für gewöhnlich an Tankstellen betankt. Die Tanksäulen moderner Tankstellen bieten in der Regel mehrere Sorten von Kraftstoff an - zumeist Diesel und Benzin unterschiedlicher Klopffestigkeiten.

Ein erster Schritt um einer Fehlbetankung vorzubeugen war die Einführung von Zapfventilen mit unterschiedlichen Durchmessern - so weisen derzeit beispielsweise Diesel-Zapfventile einen Durchmesser von ≥ 23,6 mm auf, Benzin-Zapfventile hingegen einen Durchmesser von bis zu 21,3 mm.

Zapfventile werden umgangssprachlich auch Zapfpistolen genannt und sind über einen Schlauch mit der Tanksäule verbunden.

Durch die Anpassung des Durchmessers des Kraftfahrzeug-Tankstutzens (Tank-Einfüllrohrs) kann somit zumindest bei benzinbetriebenen Kraftfahrzeugen auf einfache Art und Weise eine Fehlbetankung mit Diesel verhindert werden.

Die Gefahr versehentlich Benzin, das durch eine im Vergleich zu einer Diesel-Zapfpistole im Durchmesser kleineren Benzin-Zapfpistole gefördert wird, in ein mit Diesel betriebenes Fahrzeug zu tanken bleibt jedoch bestehen.

Der allgemeine Stand der Technik beschreibt zu dieser Problematik eine Vielzahl unterschiedlicher Lösungen um eine Fehlbetankung eines dieselbetriebenen Kraftfahrzeugs mit Benzin zu verhindern.

Die DE 103 20 992 A1 beschreibt zum Beispiel eine derartige Vorrichtung, wobei eine Zusatzvorrichtung im Tankstutzen eines Fahrzeugs angebracht wird. Die ringförmige Zusatzvorrichtung bedingt eine Verkleinerung des Durchmessers des Tankstutzens mittels mehrerer am Umfang angeordneter Radialelemente. Der Durchmesser ist im Bereich der Radialelemente kleiner als der Durchmesser der geeigneten Zapfpistole. Die Zusatzvorrichtung ist nach oben zur Öffnung hin konisch ausgeführt, so dass die geeignete Zapfpistole leicht und einfach angeschnäbelt werden kann. Bei weiterem Einführen der geeigneten Zapfpistole werden die Radialelemente so verformt, gekippt oder bewegt, dass sich die Öffnung aufweitet und die Zapfpistole ganz in das Tankrohr eingeschoben werden kann. Die elastische oder gelenkige Bewegung der Radialelemente verursacht eine Kipp- bzw. Rotationsbewegung von Widerhaken an der Vorrichtung. Eine nicht geeignete Zapfpistole bleibt an den Widerhaken hängen und kann nicht weiter in das Tankrohr eingeführt werden.

Das Dokument DE 101 57 090 C1 beschreibt ebenso eine Anordnung zum Verhindern des Betankens eines Dieselfahrzeuges mit bleifreien Benzin. Im Tankstutzen ist dabei ein Sperrhebel vorgesehen, der zwischen einer Ruhestellung und einer Betankstellung hin und her bewegbar ist. Der Sperrhebel ist an seinem der Tanköffnung abgekehrten Ende mit einer Sperrlasche versehen, die in Ruhelage in den Querschnitt des Tankstutzens hineinragt und ein Einführen einer nicht geeigneten Zapfpistole in den Tank verhindert. Der Sperrhebel weist an seinem der Tanköffnung zugewandten Ende einen Betätigungsfortsatz auf, der durch eine geeignete Zapfpistole betätigbar ist und mittels dem der Sperrhebel in eine Betankungsstellung bewegt wird.

Weitere Ausführungsbeispiele von Vorrichtungen, die sich mit dieser Thematik beschäftigen sind unter anderem in der Dokumenten DE202005021965 und EP1790517 offenbart.

Das gattungsbildende Dokument DE 10 2011 114 824 A1 beschreibt eine Sicherheitsvorrichtung für einen Behälter sowie ein Befüllungssystem für einen Behälter mit einer Sicherheitsvorrichtung, wobei sich die in diesem Dokument offenbarte Erfindung insbesondere auf einen Fehlbefüllungsschutz für den Tank eines Kraftfahrzeugs bezieht. Die Sicherheitsvorrichtung weist eine Sperreinrichtung auf, die in einem geschlossenen Zustand ein Einführen der Abgabeeinrichtung in einen Einfüllstützen verhindert. Eine zwischen einer Mündung der Sicherheitsvorrichtung und der Sperreinrichtung angeordnete Betätigungseinrichtung ist über die Abgabeeinrichtung betätigbar, wobei eine Betätigung der Betätigungseinrichtung ein Öffnen der Sperreinrichtung bewirkt.

Die Druckschrift EP 2 061 670 A1 offenbart ein Endstück zur Befüllung eines Tanks umfassend ein Rohr mit einer Einlassöffnung und einer Hülse, die durch Einführen eines geeigneten Stutzens relativ zu dem Rohr bewegbar ist.

Das Dokument GB 2 422 144 A beschreibt einen Diesel-Einfüllstutzen für ein Kraftfahrzeug umfassend ein Rohr mit einer Einlassöffnung um einen Diesel-Tankpistole aufzunehmen.

Weiterhin beschreibt das Dokument EP 1 262 357 A1 einen Kraftfahrzeug-Kraftstofftank mit einem Einfüllstutzen zur Aufnahme einer Zapfpistole für Diesel-kraftstoffe.

### Aufgabenstellung

Es ist Aufgabe der Erfindung eine zu den bekannten Lösungen alternative Vorrichtung zum Schutz vor Fehlbetankung, insbesondere eines dieselbetriebenen Kraftfahrzeugs, vorzuschlagen.

Die Lösung der Aufgabe erfolgt erfindungsgemäß durch eine Vorrichtung zum Schutz vor Fehlbetankung umfassend ein Gehäuse und ein im Gehäuse angeordnetes Verschlusselement, wobei das Verschlusselement umfänglich zumindest eine Verschlusslasche aufweist und das Gehäuse zumindest eine der Verschlusslasche zugeordnete Gehäuselasche aufweist, wobei das Verschlusselement relativ zum Gehäuse axial bewegbar ist, wodurch ein Trennelement öffenbar ist und eine Betankung ermöglicht wird, wobei die Verschlusslasche mit der zugeordneten Gehäuselasche eine Rastverbindung ausbildet, wobei die Verschlusslasche so ausgebildet ist, dass sie in Richtung der Längsachse der Vorrichtung eine Ausstülpung radial nach innen aufweist, wobei die Ausstülpung so ausgebildet ist, dass beim Einführen einer geeigneten Zapfpistole in die Vorrichtung die Verschlusslasche und die zugeordnete Gehäuselasche radial nach außen bewegt werden und so ein Lösen der jeweiligen Rastverbindung zwischen der Verschlusslasche und der zugeordneten Gehäuselasche bewirkt wird.

Bei der geeigneten Zapfpistole handelt es sich insbesondere um eine Zapfpistole in für Diesel-Kraftstoffe üblicher Form.

Bei einer nicht geeigneten Zapfpistole handelt es sich um eine im Vergleich zur Diesel-Zapfpistole im Durchmesser kleinere Zapfpistole, wie dies beispielsweise bei Zapfpistolen für Benzin-Kraftstoffe der Fall ist.

Eine Verwendung der erfindungsgemäßen Vorrichtung ist jedoch ebenso in nicht vorwiegend automotiv genutzten Tanksystemen und/oder Tankarten, wie beispielsweise Heizöltanks, vorstellbar.

Die erfindungsgemäße Vorrichtung umfasst das Gehäuse, wobei das Gehäuse ein tankseitiges Gehäuseende, ein befüllungsseitiges Gehäuseende, sowie einen Gehäuseinnenraum aufweist.

Das Gehäuse ist bevorzugt aus Kunststoff gefertigt. Ein aus einem metallischen Werkstoff gefertigtes Gehäuse ist ebenso anwendbar.

Das Verschlusselement ist erfindungsgemäß im Gehäuse, d.h. im Gehäuseinnenraum, angeordnet, wodurch unter anderem eine kompakte Bauweise der erfindungsgemäßen Vorrichtung erreicht wird.

Das Verschlusselement ist bevorzugt aus Kunststoff gefertigt. Ein aus einem metallischen Werkstoff gefertigtes Verschlusselement ist ebenso anwendbar.

Gemäß der vorliegenden Erfindung weist das Verschlusselement an seinem Umfang zumindest eine Verschlusslasche auf, wobei die Verschlusslasche an dem Umfang des Verschlusselements angeordnet ist.

Die Verschlusslasche ist bevorzugt aus dem gleichen Material wie das Verschlusselement gefertigt.

Des Weiteren weist das Gehäuse entsprechend der vorliegenden Erfindung an seinem Umfang zumindest eine Gehäuselasche auf, wobei eine Gehäuselasche einer Verschlusslasche zugeordnet ist.

Die Gehäuselasche ist bevorzugt aus dem gleichen Material wie das Gehäuse gefertigt.

Erfindungsgemäß bildet die Verschlusslasche mit der zugeordneten Gehäuselasche die Rastverbindung aus.

Die Verschlusslasche und die zugeordnete Gehäuselasche sind dabei so ausgebildet, dass durch Einführen der geeigneten Zapfpistole die Rastverbindung zwischen der Verschlusslasche und der zugeordneten Gehäuselasche gelöst wird. Bei weiterem Einführen der geeigneten Zapfpistole in Richtung des tankseitigen Gehäuseendes bewegt sich das Verschlusselement relativ zum Gehäuse, axial in Richtung des tankseitigen Gehäuseendes. Durch diese Bewegung kann die geeignete Zapfpistole so weit in die erfindungsgemäße Vorrichtung eingeführt werden, dass sie das Trennelement öffnet und eine Betankung eines Tanks möglich ist.

Axial bedeutet in Richtung oder parallel zur Längsachse des zylindrischen Gehäuses. Radial bedeutet in Richtung oder parallel zur Querachse des zylindrischen Gehäuses.

Die Rastverbindung zwischen der Verschlusslasche und der zugeordneten Gehäuselasche wird durch Einführen der geeigneten Zapfpistole reversibel gelöst, d.h., dass bei Entfernung der geeigneten Zapfpistole aus der Vorrichtung die Verschlusslasche mit der zugeordneten Gehäuselasche wieder die Rastverbindung ausbildet.

Weiterbildungen der Erfindung sind in den abhängigen Ansprüchen, der Beschreibung sowie den beigefügten Zeichnungen angegeben.

Besonders bevorzugt weist das Verschlusselement zumindest drei Verschlusslaschen auf, wobei die drei Verschlusslaschen gleichmäßig über den Umfang des Verschlusselements verteilt sind.

Besonders bevorzugt weist das Gehäuse an seinem Umfang (gleichmäßig verteilt) zumindest drei Gehäuselaschen auf, wobei jeweils eine Gehäuselasche jeweils einer Verschlusslasche zugeordnet ist.

Bevorzugt sind das Gehäuse und das im Gehäuse angeordnete Verschlusselement koaxial angeordnet.

In einer vorteilhaften Ausführungsvariante der vorliegenden Erfindung ist das Gehäuse im Wesentlichen zylindrisch und das Verschlusselement im Wesentlichen konisch, insbesondere trichterartig, ausgeführt. In einer weiteren vorteilhaften Ausführungsvariante verjüngt sich das Verschlusselement in Richtung des tankseitigen Gehäuseendes.

"Quer"-Bezeichnungen beziehen sich im Folgenden immer auf die Lage der Querachse des zylindrischen Gehäuses. "Längs"-Bezeichnungen beziehen sich dementsprechend auf die Lage der Längsachse des zylindrischen Gehäuses.

Über die trichterartige Ausbildung des Verschlusselements kann konstruktiv auf einfache Art und Weise eine Verkleinerung des Durchmessers der erfindungsgemäßen Vorrichtung erreicht werden.

Ebenso vorteilhaft ist eine im Wesentlichen zylindrische Ausbildung des Verschlusselements, wobei konstruktiv am Innenumfang des Verschlusselements sich in Richtung des Gehäuseendes verjüngende Rippen vorgesehen sind.

In einer besonders bevorzugten Ausführungsform der vorliegenden Erfindung ist das Trennelement am tankseitigen Gehäuseende angeordnet und so ausgebildet, dass in einer Trennelement-Ausgangsposition eine Trennung des Gehäuseinnenraums und eines Tanks ermöglicht wird, so dass das Befüllen des Tanks mit einer Zapfpistole nicht möglich ist.

Die Trennelement-Ausgangsposition beschreibt somit eine geschlossene Position des Trennelements. Das Trennelement ist dabei bevorzugt quer (normal auf die Längsachse des Gehäuses) angeordnet.

Durch die Verkleinerung des Durchmessers der erfindungsgemäßen Vorrichtung mittels beispielsweise des trichterförmigen Verschlusselements wird mitunter eine missbräuchliche Betankung durch eine nicht geeignete Zapfpistole verhindert, indem der Durchmesser der erfindungsgemäßen Vorrichtung kleiner gestaltet ist als der Durchmesser der nicht geeigneten Zapfpistole. Die nicht geeignete Zapfpistole wird je nach Durchmesser an einer Stelle des trichterförmigen Verschlusselements am weiteren Einführen in Richtung Trennelement (in Richtung tankseitiges Gehäuseende) gehindert und erreicht das Trennelement somit nicht. Das Trennelement verbleibt in der Trennelement-Ausgangsposition.

Dadurch, dass das Trennelement in der Trennelement-Ausgangsposition verbleibt kommt es selbst bei einem Versuch der Betankung des Tanks über eine nicht geeignete Zapfpistole aufgrund der in dem Zapfventil (Zapfpistole) standardmäßig integrierten Zapfventilautomatik zu einem sofortigen Abschalten der Zapfpistole.

Das Trennelement ist jedoch durch eine geeignete Zapfpistole in eine geöffnete Position bewegbar - aus der Trennelement-Ausgangsposition herausbewegbar.

Besonders bevorzugt ist das Trennelement klappenartig ausgeführt.

Des Weiteren besonders vorteilhaft ist das Trennelement aus einem elektrisch leitfähigem Material, insbesondere einem metallischen Werkstoff, wie beispielsweise Federstahl, gefertigt, wodurch das Trennelement als ein metallischer Kontaktpunkt für die geeignete Zapfpistole dient und somit als Erdung wirkt.

Vorteilhafterweise ist das Verschlusselement zumindest teilweise elastisch ausgeführt.

Gemäß einer weiteren bevorzugten Ausführungsform der Erfindung weist das Verschlusselement, insbesondere im Bereich des tankseitigen Gehäuseendes, mehrere Einschnitte auf, wodurch das Verschlusselement zumindest teilweise in mehrere Verschlusselement-Segmente unterteilt wird. Aufgrund der elastischen Ausbildung des Verschlusselements und der Ausbildung mehrerer Verschlusselement-Segmente ist eine radiale Bewegung des Verschlusselements und/oder der Verschlusselement Segmente möglich.

Vorteilhafterweise ist die Verschlusslasche und die Gehäuselasche elastisch ausgebildet.

In einer besonders bevorzugten Ausführungsform der Erfindung ist an einem Außenumfang des Gehäuses ein elastisches Spannelement angeordnet, wobei das Spannelement auf die Gehäuselasche eine radiale Rückstellkraft aufbringt, wodurch in Abwesenheit der geeigneten Zapfpistole die Gehäuselasche in einer Gehäuselaschen-Ausgangsposition gehalten werden.

Die Gehäuselaschen-Ausgangsposition beschreibt somit eine Position, in der die Verschlusslasche mit der zugeordneten Gehäuselaschen die jeweiligen Rastverbindungen ausbilden.

Vorteilhafterweise umfasst die der Verschlusslasche zugeordnete Gehäuselasche eine Rastvorrichtung, wobei die Verschlusslasche in Abwesenheit der geeigneten Zapfpistole bevorzugt an einem Verschlusslaschenende in die Rastvorrichtung der zugeordneten Gehäuselasche einrastet und so die Rastverbindung gebildet wird.

Die Verschlusslasche ist erfindungsgemäß so ausgebildet, dass sie in axialer Richtung eine Ausstülpung radial nach innen aufweist, wobei die Ausstülpung so ausgebildet ist, dass bei Einführen der geeigneten Zapfpistole die Verschlusslasche und die zugeordnete Gehäuselasche radial nach außen bewegt werden und so ein Lösen der Rastverbindung zwischen der Verschlusslasche und der zugeordneten Gehäuselasche bewirkt wird.

"Nach innen" bedeutet in Richtung zentraler Längsachse des zylindrischen Gehäuses - "nach außen" beschreibt die dazu entgegengesetzte Richtung.

Gemäß einer weiteren besonders bevorzugten Ausführungsform der Erfindung weist das Verschlusselement mehrere Gleitelemente auf, wobei die Gleitelemente an einem Außenumfang des Verschlusselements in Richtung des Gehäuses ausgebildet sind. Dabei ist erfindungsgemäß jeweils einem Gleitelement eine axiale Kulissenführung an einem Innenumfang des Gehäuses zugeordnet, wobei das jeweilige Gleitelement in der jeweiligen Kulissenführung des Gehäuses axial führbar ist.

Die Gleitelemente sind besonders bevorzugt am Verschlusselement im Bereich des tankseitigen Gehäuseendes angeordnet.

Die Kulissenführung ist vorteilhafterweise derart ausgebildet, dass die Gleitelemente insbesondere lediglich im Bereich des tankseitigen Gehäuseendes radial nach außen bewegbar sind.

Besonders bevorzugt weist die erfindungsgemäße Vorrichtung im Bereich des tankseitigen Gehäuseendes zumindest ein Federelement auf, wobei das Federelement auf das Verschlusselement eine axiale Rückstellkraft aufbringt, wodurch in Abwesenheit der geeigneten Zapfpistole das Verschlusselement in eine Verschlusselement-Ausgangsposition gedrückt wird.

In der Verschlusselement-Ausgangsposition bildet die Verschlusslasche des Verschlusselements mit der ihr zugeordneten Gehäuselasche die Rastverbindung aus.

In einer vorteilhaften Ausführungsvariante ist das Federelement einteilig mit dem Trennelement ausgebildet, wodurch eine Bauteilreduktion und eine kompaktere Bauweise der erfindungsgemäßen Vorrichtung erzielt werden.

Durch die im gesamten kompakte und einfache Bauweise ist die erfindungsgemäße Vorrichtung vorteilhafterweise durch einen Befüllungssockel eines Tankstutzens des Tanks montier- und demontierbar. Eine Befestigung im Tankstutzen erfolgt dabei bevorzugt mittels eines Bajonettverschlusses zwischen dem Gehäuse der erfindungsgemäßen Vorrichtung und dem Tankstutzen, wobei eine Anwendung in jeglicher Art von Tankstutzen möglich ist.

### Kurzbeschreibung der Zeichnungen

Die Erfindung wird im Folgenden beispielhaft unter Bezugnahme auf die Zeichnungen beschrieben.
- Fig. 1: zeigt eine Explosionszeichnung einer beispielhaften Ausführungsvariante der erfindungsgemäßen Vorrichtung
- Fig. 2: zeigt eine Schnittansicht (A-A) der beispielhaften Ausführungsvariante in FIG. 1
- FIG. 3: zeigt eine Längs-Darstellung der beispielhaften Ausführungsvariante in FIG. 1
- FIG. 4: zeigt eine tankseitige Querschnitt-Darstellung der beispielhaften Ausführungsvariante in FIG. 1
- FIG. 5: zeigt eine befüllungsseitige Querschnitt-Darstellung der beispielhaften Ausführungsvariante in FIG. 1

### Detaillierte Beschreibung der Erfindung

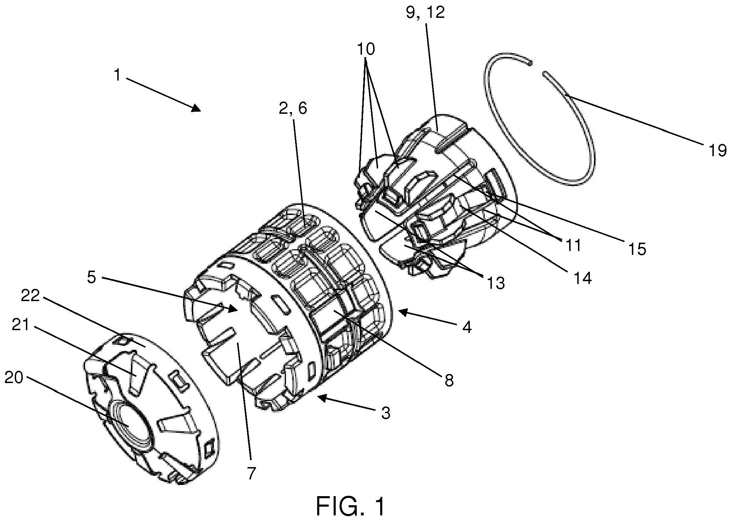

Unter Bezugnahme auf die FIG. 1 bis FIG. 5 wird im Folgenden eine mögliche Ausführungsvariante der erfindungsgemäßen Vorrichtung 1 beschrieben.

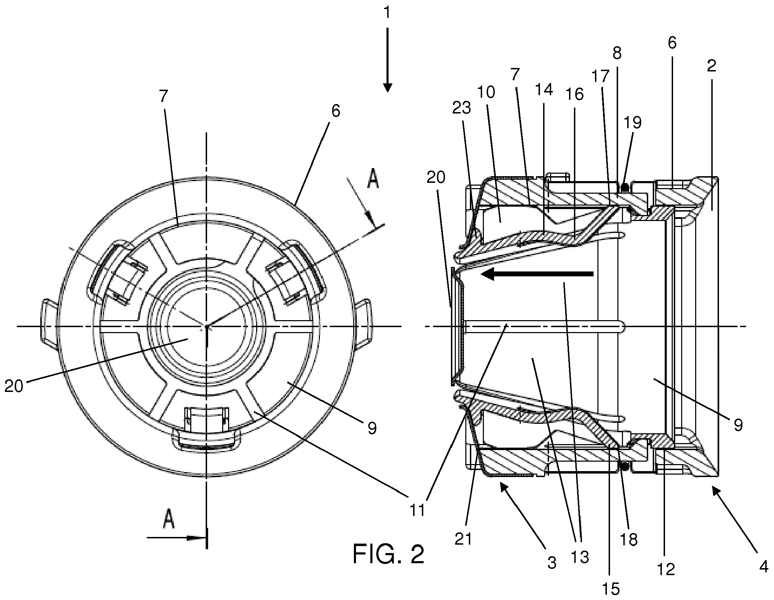

FIG. 1 zeigt eine Explosionsdarstellung der Ausführungsvariante der erfindungsgemäßen Vorrichtung 1 zum Schutz vor Fehlbetankung und dient der kurzen Beschreibung der grundlegenden Bauteile der Vorrichtung 1. Einzelheiten werden in den FIG. 2 bis FIG. 5 näher gezeigt.

Die in FIG. 1 gezeigte Vorrichtung 1 umfasst ein Gehäuse 2 ein Verschlusselement 9, ein Spannelement 19 und ein Federelement 21, wobei das Federelement 21 einteilig mit einem Trennelement 20 ausgeführt ist.

Das Gehäuse 2 weist ein tankseitiges Gehäuseende 3, ein befüllungsseitiges Gehäuseende 4 und einen Gehäuseinnenraum 5 auf.

Das Gehäuse 2 weist an seinem Umfang drei Gehäuselaschen 8 auf. Die Gehäuselaschen 8 sind gleichmäßig über den Umfang des Gehäuses 8 verteilt.

Das Verschlusselement 9 weist an seinem Umfang drei Verschlusslaschen 14 auf, wobei die Verschlusslaschen 14 gleichmäßig über den Umfang des Verschlusselements 9 verteilt sind.

Das Gehäuse 2 ist im Wesentlichen zylindrisch ausgeführt.

Das Verschlusselement 9 ist im Wesentlichen konisch, insbesondere trichterartig, ausgeführt. Das Verschlusselement 9 verjüngt sich in Richtung des tankseitigen Gehäuseendes 3.

Das Verschlusselement 9 weist mehrere Einschnitte 11 auf, wodurch das Verschlusselement 9 zumindest teilweise in mehrere Verschlusselement-Segmente 13 unterteilt wird.

Im Bereich der Verschlusselement-Segmente 13 sind mehrere Gleitelemente 10 angeordnet.

Der Trennelement-/Federelement-Verbund 22 ist kreisringartig ausgeführt und weist ein klappenartiges Trennelement 20 und mehrere nasenartige Federelemente 21 auf. Die Federelemente 21 sind im Wesentlichen gleichmäßig über den kreisringartigen Trennelement-/Federelement-Verbund 22 verteilt.

Der Trennelement-/Federelement-Verbund 22 ist über eine und/oder mehrere Klippverbindungen mit dem tankseitigen Gehäuseende 3 verbindbar.

Die Federelemente 21 bringen auf das Verschlusselement 9 eine axiale Rückstellkraft auf, wodurch in Abwesenheit der geeigneten Zapfpistole das Verschlusselement 9 in eine Verschlusselement-Ausgangsposition gedrückt wird.

In FIG. 2 ist eine Schnittansicht (Schnitt A-A) der beispielhaften Ausführungsform der erfindungsgemäßen Vorrichtung 1 dargestellt.

Das Verschlusselement 9 ist koaxial im Gehäuse 2 (im Gehäuseinnenraum 5) angeordnet.

Jeweils eine Gehäuselasche 8 ist jeweils einer Verschlusslasche 14 zugeordnet, wobei jeweils eine Verschlusslasche 14 mit jeweils einer zugeordneten Gehäuselasche 8 im Bereich eines Verschlusslaschenendes 15 die jeweilige Rastverbindung 17 ausbildet.

Die der jeweiligen Verschlusslasche 14 zugeordnete Gehäuselasche 8 umfasst eine Rastvorrichtung 18, wobei die jeweilige Verschlusslasche 14 in Abwesenheit der geeigneten Zapfpistole bevorzugt an dem Verschlusslaschenende 15 in die Rastvorrichtung 18 der jeweils zugeordneten Gehäuselasche 8 einrastet und so die jeweilige Rastverbindung 17 gebildet wird.

Die Verschlusslaschen 14 und die zugeordneten Gehäuselaschen 8 sind dabei so ausgebildet, dass durch Einführen der geeigneten Zapfpistole sämtliche Rastverbindungen 17 zwischen den jeweiligen Verschlusslaschen 14 und den jeweils zugeordneten Gehäuselaschen 8 gelöst werden. Bei weiterem Einführen der geeigneten Zapfpistole in Richtung des tankseitigen Gehäuseendes 3 bewegt sich das Verschlusselement 9 relativ zum Gehäuse 2, axial in Richtung des tankseitigen Gehäuseendes 3. Die beschriebene Bewegung ist in FIG. 2 mittels eines Pfeils dargestellt. Durch diese Bewegung kann die geeignete Zapfpistole so weit in die erfindungsgemäße Vorrichtung 1 eingeführt werden, dass sie das Trennelement 20 öffnet (in tankseitige Richtung wegklappt) und eine Betankung eines Tanks möglich ist.

Die Verschlusslaschen 14 sind so ausgebildet, dass sie jeweils in axialer Richtung eine Ausstülpung 16 radial nach innen aufweisen, wobei die Ausstülpung 16 so ausgebildet ist, dass bei Einführen der geeigneten Zapfpistole die Verschlusslaschen 14 und die zugeordneten Gehäuselaschen 8 radial nach außen bewegt werden und so ein Lösen der jeweiligen Rastverbindungen 17 zwischen den Verschlusslaschen 14 und den zugeordneten Gehäuselaschen 8 bewirkt wird.

Die jeweilige Rastverbindung 17 zwischen den jeweiligen Verschlusslaschen 14 und den jeweils zugeordneten Gehäuselaschen 8 wird durch Einführen der geeigneten Zapfpistole reversibel gelöst, d.h., dass bei Entfernung der geeigneten Zapfpistole aus der Vorrichtung 1 wieder sämtliche Verschlusslaschen 14 mit den ihnen jeweils zugeordneten Gehäuselaschen 8 eine Rastverbindung 17 ausbilden (verrasten).

Das Verschlusselement 9 weist mehrere Gleitelemente 10 auf, wobei die Gleitelemente 10 an einem Außenumfang des Verschlusselements 12 in Richtung des Gehäuses 2 ausgebildet sind. Jeweils einem Gleitelement 10 ist eine axiale Kulissenführung an einem Innenumfang des Gehäuses 7 zugeordnet, wobei das jeweilige Gleitelement 10 in der jeweiligen Kulissenführung des Gehäuses 2 axial führbar ist.

Die Gleitelemente 10 sind am Verschlusselement 9 (an den Verschlusselement-Segmenten 13) im Bereich des tankseitigen Gehäuseendes 3 angeordnet.

Die Kulissenführung ist so ausgebildet, dass die Gleitelemente 10 insbesondere lediglich im Bereich des tankseitigen Gehäuseendes 3 radial nach außen bewegbar sind.

Am Verschlusselement 9 sind bei diesem Ausführungsbeispiel der erfindungsgemäßen Vorrichtung 1 zudem im Bereich des tankseitigen Gehäuseendes 3 Stopperelemente 23 angeordnet, die bei axialer Bewegung des Verschlusselements 9 in Richtung des tankseitigen Gehäuseendes 3 (Pfeilrichtung in FIG. 2) mit den Federelementen 21 zusammenwirken und als Angriffspunkt für die axiale Rückstellkraft der Federelemente 21 dienen.

In FIG. 2 ist die trichterförmige Ausbildung des Verschlusselements 9 erkennbar.

Durch die Verkleinerung des Durchmessers der erfindungsgemäßen Vorrichtung 1 mittels des trichterförmigen Verschlusselements 9 wird mitunter eine missbräuchliche Betankung durch eine nicht geeignete Zapfpistole verhindert, indem der Durchmesser der erfindungsgemäßen Vorrichtung 1 kleiner gestaltet ist als der Durchmesser der nicht geeigneten Zapfpistole. Die nicht geeignete Zapfpistole wird je nach Durchmesser an einer Stelle des trichterförmigen Verschlusselements 9 am weiteren Einführen in Richtung Trennelement 20 (in Richtung tankseitiges Gehäuseende 3) gehindert und erreicht das Trennelement 20 somit nicht. Das Trennelement verbleibt in der Trennelement-Ausgangsposition.

Das klappenartige Trennelement 20 ist durch eine geeignete Zapfpistole in eine geöffnete Position bewegbar - in diesem Ausführungsbeispiel der erfindungsgemäßen Vorrichtung 1 in tankseitige Richtung wegklappbar.

An einem Außenumfang des Gehäuses 6 ist das elastische Spannelement 19 angeordnet, wobei das Spannelement 19 auf die Gehäuselaschen 8 eine radiale Rückstellkraft aufbringt, wodurch in Abwesenheit der geeigneten Zapfpistole die Gehäuselaschen 8 in einer Gehäuselaschen-Ausgangsposition gehalten werden.

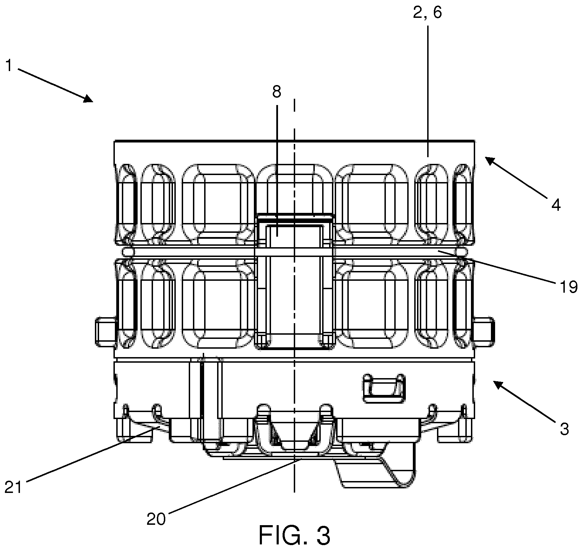

FIG. 3 zeigt eine Längs-Darstellung der beispielhaften Ausführungsvariante der erfindungsgemäßen Vorrichtung 1, wobei insbesondere ein Teil des Außenumfangs des Gehäuses 6, die Anordnung des Spannelements 19 und die Anordnung einer der Gehäuselaschen 8 erkennbar ist.

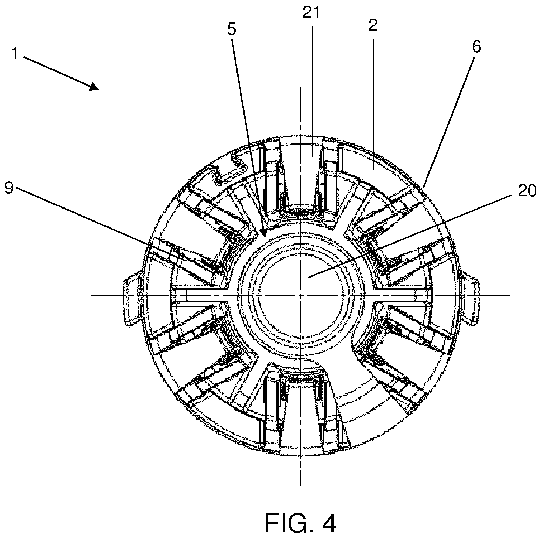

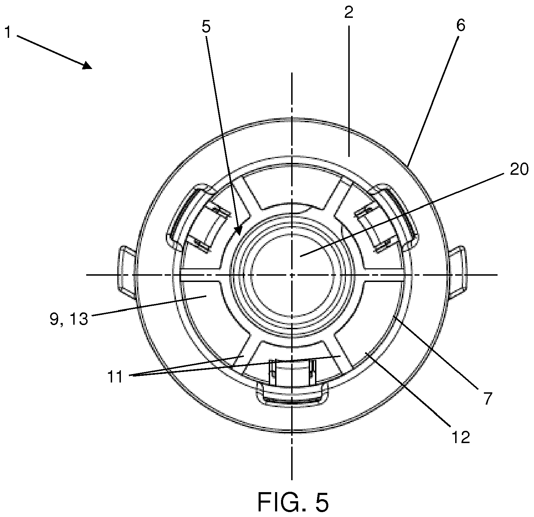

In FIG 4. und FIG. 5 sind zwei Querschnitt-Darstellungen der beispielhaften Ausführungsvariante der erfindungsgemäßen Vorrichtung 1 dargestellt - in FIG. 4 eine tankseitige Ansicht und in FIG. 5 eine befüllungsseitige Ansicht.

In FIG. 4 ist insbesondere der Trennelement-/Federelementverbund 22 erkennbar. Die Federelemente 21 und das klappenartige Trennelement 20 sind gleichmäßig über den Umfang des kreisringförmigen Trennelement-/Federelementverbunds 22 verteilt. Die nasenförmigen Federelemente 21 und das klappenartige Trennelement 20 erstrecken sich radial nach innen.

In FIG 5 sind insbesondere das Gehäuse 2 und das koaxial angeordnete Verschlusselement 9, sowie das Trennelement 20 ersichtlich. Die Verschlusselement-Segmente 13 des Verschlusselements 9 verjüngen sich in Richtung des tankseitigen Gehäuseendes 3.

### Bezugszeichenliste

- 1: Vorrichtung
- 2: Gehäuse
- 3: Tankseitiges Gehäuseende
- 4: Befüllungsseitiges Gehäuseende
- 5: Gehäuseinnenraum
- 6: Außenumfang des Gehäuses
- 7: Innenumfang des Gehäuses
- 8: Gehäuselasche
- 9: Verschlusselement
- 10: Gleitelement
- 11: Einschnitt
- 12: Außenumfang des Verschlusselements
- 13: Verschlusselement-Segment
- 14: Verschlusslasche
- 15: Verschlusslaschenende
- 16: Ausstülpung
- 17: Rastverbindung
- 18: Rastvorrichtung
- 19: Spannelement
- 20: Trennelement
- 21: Federelement
- 22: Trennelement-/Federelement-Verbund
- 23: Stopperelement

## Patentansprüche

1. Vorrichtung (1) zum Schutz vor Fehlbetankung umfassend ein Gehäuse (2) und ein im Gehäuse (2) angeordnetes Verschlusselement (9), wobei das Verschlusselement (9) umfänglich zumindest eine Verschlusslasche (14) aufweist und das Gehäuse (2) zumindest eine der Verschlusslasche (14) zugeordnete Gehäuselasche (8) aufweist, wobei das Verschlusselement (9) relativ zum Gehäuse (2) axial bewegbar ist, wodurch ein Trennelement (20) öffenbar ist und eine Betankung ermöglicht wird, und wobei die Verschlusslasche (14) mit der zugeordneten Gehäuselasche (8) eine Rastverbindung ausbildet,
**dadurch gekennzeichnet, dass** die Verschlusslasche (14) so ausgebildet ist, dass sie in Richtung der Längsachse der Vorrichtung (1) eine Ausstülpung (16) radial nach innen aufweist, wobei die Ausstülpung (16) so ausgebildet ist, dass beim Einführen einer geeigneten Zapfpistole in die Vorrichtung (1) die Verschlusslasche (14) und die zugeordnete Gehäuselasche (8) radial nach außen bewegt werden und so ein reversibles Lösen der jeweiligen Rastverbindung (17) zwischen der Verschlusslasche (14) und der zugeordneten Gehäuselasche (8) bewirkt wird.

2. Vorrichtung (1) zum Schutz vor Fehlbetankung nach Anspruch 1,
**dadurch gekennzeichnet, dass** das Verschlusselement (9) umfänglich zumindest 3 Verschlusslaschen (14) aufweist und das Gehäuse (2) zumindest drei den Verschlusslaschen (14) zugeordnete Gehäuselaschen (8) aufweist.

3. Vorrichtung (1) zum Schutz vor Fehlbetankung nach Anspruch 1 oder 2,
**dadurch gekennzeichnet, dass** das Gehäuse (2) und das im Gehäuse (2) angeordnete Verschlusselement (9) koaxial angeordnet sind.

4. Vorrichtung (1) zum Schutz vor Fehlbetankung nach einem der Ansprüche 1 bis 3,
**dadurch gekennzeichnet, dass** das Gehäuse (2) im Wesentlichen zylindrisch ausgebildet ist, wobei das Gehäuse (2) ein tankseitiges Gehäuseende (3), ein befüllungsseitiges Gehäuseende (4) und einen Gehäuseinnenraum (5) aufweist.

5. Vorrichtung (1) zum Schutz vor Fehlbetankung nach einem der Ansprüche 1 bis 4,
**dadurch gekennzeichnet, dass** das Trennelement (20) am tankseitigen Gehäuseende (3) angeordnet ist und so ausgebildet ist, dass in einer Trennelement-Ausgangsposition eine Trennung des Gehäuseinnenraums (5) und eines Tanks ermöglicht wird, so dass das Befüllen des Tanks mit einer Zapfpistole nicht möglich ist.

6. Vorrichtung (1) zum Schutz vor Fehlbetankung nach einem der vorhergehenden Ansprüche,
**dadurch gekennzeichnet, dass** das Trennelement (20) klappenartig ausgeführt ist.

7. Vorrichtung (1) zum Schutz vor Fehlbetankung nach einem der vorhergehenden Ansprüche,
**dadurch gekennzeichnet, dass** das Trennelement (20) durch eine geeignete Zapfpistole in eine geöffnete Position bewegbar ist.

8. Vorrichtung (1) zum Schutz vor Fehlbetankung nach einem der vorhergehenden Ansprüche,
**dadurch gekennzeichnet, dass** das Verschlusselement (9) im Wesentlichen konisch, insbesondere trichterartig, ausgeführt ist, wobei sich das Verschlusselement (9) in Richtung des tankseitigen Gehäuseendes (3) verjüngt.

9. Vorrichtung (1) zum Schutz vor Fehlbetankung nach einem der vorhergehenden Ansprüche,
**dadurch gekennzeichnet, dass** das Verschlusselement (9) mehrere Einschnitte (11) aufweist, wodurch das Verschlusselement (9) zumindest teilweise in mehrere Verschlusselement-Segmente (13) unterteilt wird.

10. Vorrichtung (1) zum Schutz vor Fehlbetankung nach einem der vorhergehenden Ansprüche,
**dadurch gekennzeichnet, dass** das Verschlusselement (9) zumindest teilweise elastisch ausgeführt ist.

11. Vorrichtung (1) zum Schutz vor Fehlbetankung nach einem der vorhergehenden Ansprüche,
**dadurch gekennzeichnet, dass** die Verschlusslasche (14) und die Gehäuselasche (8) elastisch ausgebildet sind.

12. Vorrichtung (1) zum Schutz vor Fehlbetankung nach einem der vorhergehenden Ansprüche,
**dadurch gekennzeichnet, dass** an einem Außenumfang des Gehäuses (6) ein elastisches Spannelement (19) angeordnet ist, wobei das Spannelement (19) auf die Gehäuselasche (8) eine radiale Rückstellkraft aufbringt, wodurch in Abwesenheit einer geeigneten Zapfpistole die Gehäuselasche (8) in einer Gehäuselaschen-Ausgangsposition gehalten wird.

13. Vorrichtung (1) zum Schutz vor Fehlbetankung nach einem der vorhergehenden Ansprüche,
**dadurch gekennzeichnet, dass** die der Verschlusslasche (14) zugeordnete Gehäuselasche (8) eine Rastvorrichtung (18) aufweist, wobei die Verschlusslasche (14) in Abwesenheit einer geeigneten Zapfpistole bevorzugt an einem Verschlusslaschenende (15) in die Rastvorrichtung (18) der zugeordneten Gehäuselasche (8) einrastet und so die Rastverbindung (17) ausgebildet wird.

14. Vorrichtung (1) zum Schutz vor Fehlbetankung nach einem der vorhergehenden Ansprüche,
**dadurch gekennzeichnet, dass** das Verschlusselement (9) mehrere Gleitelemente (10) aufweist, wobei die Gleitelemente (10) an einem Außenumfang des Verschlusselements (12) in Richtung des Gehäuses (2) ausgebildet sind.

15. Vorrichtung (1) zum Schutz vor Fehlbetankung nach Anspruch 14,
**dadurch gekennzeichnet, dass** jeweils einem Gleitelement (10) eine axiale Kulissenführung an einem Innenumfang des Gehäuses (7) zugeordnet ist, wobei das jeweilige Gleitelement (10) in der jeweiligen Kulissenführung des Gehäuses (2) axial führbar ist.

16. Vorrichtung (1) zum Schutz vor Fehlbetankung nach Anspruch 15,
**dadurch gekennzeichnet, dass** die Kulissenführung derart ausgebildet ist, dass die Gleitelemente (10) insbesondere lediglich im Bereich des tankseitigen Gehäuseendes (3) radial nach außen bewegbar sind.

17. Vorrichtung (1) zum Schutz vor Fehlbetankung nach einem der vorhergehenden Ansprüche,
**dadurch gekennzeichnet, dass** im Bereich des tankseitigen Gehäuseendes (3) zumindest ein Federelement (21) angeordnet ist, wobei das Federelement (21) auf das Verschlusselement (9) eine axiale Rückstellkraft aufbringt, wodurch in Abwesenheit einer geeigneten Zapfpistole das Verschlusselement (9) in eine Verschlusselement-Ausgangsposition gedrückt wird.

18. Vorrichtung (1) zum Schutz vor Fehlbetankung nach Anspruch 17,
**dadurch gekennzeichnet, dass** das Federelement (21) einteilig mit dem Trennelement (20) ausgebildet ist.

## Claims

1. Device (1) for protection against incorrect refuelling, comprising a housing (2) and a closing element (9) arranged in the housing (2), wherein the closing element (9) has at least one closing tab (14) on its periphery and the housing (2) has at least one housing tab (8) assigned to the closing tab (14), wherein the closing element (9) is moveable axially relative to the housing (2), whereby a separating element (20) can be opened and refuelling is possible, and wherein the closing tab (14) with the assigned housing tab (8) forms a catch connection, **characterized in that** the closing tab (14) is configured such that it has a radially inward protrusion (16) in the direction of the longitudinal axis of the device (1), wherein the protrusion (16) is configured such that on insertion of a suitable filler nozzle in the device (1), the closing tab (14) and its assigned housing tab (8) are moved radially outward and thus achieve a reversible release of the respective catch connection (17) between the closing tab (14) and the assigned housing tab (8).

2. Device (1) for protection against incorrect refuelling according to Claim 1, **characterized in that** the closing element (9) has at least three closing tabs (14) on its periphery and the housing (2) has at least three housing tabs (8) assigned to the closing tabs (14).

3. Device (1) for protection against incorrect refuelling according to Claim 1 or 2, **characterized in that** the housing (2) and the closing element (9) arranged in the housing (2) are arranged coaxially.

4. Device (1) for protection against incorrect refuelling according to any of Claims 1 to 3, **characterized in that** the housing (2) is configured substantially cylindrical, wherein the housing (2) has a tank-side housing end (3), a filling-side housing end (4) and a housing interior (5).

5. Device (1) for protection against incorrect refuelling according to any of Claims 1 to 4, **characterized in that** the separating element (20) is arranged on the tank-side housing end (3) and is configured such that in a separating element starting position, the housing interior and a tank can be separated so that filling the tank via a filler nozzle is not possible.

6. Device (1) for protection against incorrect refuelling according to any of the preceding claims, **characterized in that** the separating element (20) is designed as a flap.

7. Device (1) for protection against incorrect refuelling according to any of the preceding claims, **characterized in that** the separating element (20) can be moved into an open position by a suitable filler nozzle.

8. Device (1) for protection against incorrect refuelling according to any of the preceding claims, **characterized in that** the closing element (9) is configured substantially conical, in particular hopper-like, wherein the closing element (9) tapers in the direction of a tank-side housing end (3).

9. Device (1) for protection against incorrect refuelling according to any of the preceding claims, **characterized in that** the closing element (9) comprises several notches (11), whereby the closing element (9) is subdivided at least partly into several closing element segments (13).

10. Device (1) for protection against incorrect refuelling according to any of the preceding claims, **characterized in that** the closing element (9) is configured at least partially elastically.

11. Device (1) for protection against incorrect refuelling according to any of the preceding claims, **characterized in that** the closing tab (14) and the housing tab (8) are configured elastically.

12. Device (1) for protection against incorrect refuelling according to any of the preceding claims, **characterized in that** an elastic clamping element (19) is arranged on an outer periphery of the housing (6), wherein the clamping element (19) applies a radial return force to the housing tab (8), whereby in the absence of a suitable filler nozzle, the housing tab (8) is held in a housing tab starting position.

13. Device (1) for protection against incorrect refuelling according to any of the preceding claims, **characterized in that** the housing tab (8) assigned to the closing tab (14) has a catch device (18), wherein in the absence of a suitable filler nozzle, the closing tab (14) engages preferably at a closing tab end (15) in the catch device (18) of the assigned housing tab (8) and thus the catch connection (17) is formed.

14. Device (1) for protection against incorrect refuelling according to any of the preceding claims, **characterized in that** the closing element (9) comprises a plurality of slip elements (10), wherein the slip elements (10) are formed on the outer periphery of the closing element (12) in the direction of the housing (2).

15. Device (1) for protection against incorrect refuelling according to Claim 14, **characterized in that** an axial sliding block guide on an inner periphery of the housing (7) is assigned to each slip element (11), wherein the respective slip element (10) can be guided axially in the respective sliding block guide of the housing (2).

16. Device (1) for protection against incorrect refuelling according to Claim 15, **characterized in that** the sliding block guide is configured such that the slip elements (10) can be moved radially outward in particular only in the region of the tank-side housing end (3).

17. Device (1) for protection against incorrect refuelling according to any of the preceding claims, **characterized in that** at least one spring element (21) is arranged in the region of the tank-side housing end (3), wherein the spring element (21) applies an axial return force to the closing element (9), whereby in the absence of a suitable filler nozzle, the closing element (9) is pressed into a closing element starting position.

18. Device (1) for protection against incorrect refuelling according to Claim 17, **characterized in that** the spring element (21) is formed integrally with the separating element (20).

## Revendications

1. Dispositif (1) de protection contre les erreurs de remplissage de réservoir, comprenant un boîtier (2) et un élément de fermeture (9) disposé dans le boîtier (2), l'élément de fermeture (9) présentant sur sa périphérie au moins une patte de fermeture (14) et le boîtier (2) présentant au moins une patte de boîtier (8) associée à la patte de fermeture (14), l'élément de fermeture (9) pouvant être déplacé axialement par rapport au boîtier (2), de sorte qu'un élément de séparation (20) puisse être ouvert et qu'un remplissage du réservoir soit possible,
et la patte de fermeture (14) constituant avec la patte de boîtier associée (8) une connexion par encliquetage,
**caractérisé en ce que**
la patte de fermeture (14) est réalisée de telle sorte qu'elle présente radialement vers l'intérieur dans la direction de l'axe longitudinal du dispositif (1) une protubérance (16), la protubérance (16) étant réalisée de telle sorte que lors de l'introduction d'un pistolet de remplissage approprié dans le dispositif (1), la patte de fermeture (14) et la patte de boîtier associée (8) soient déplacées radialement vers l'extérieur et qu'un desserrage réversible de la connexion par encliquetage respective (17) entre la patte de fermeture (14) et la patte de boîtier associé (8) soit réalisé.

2. Dispositif (1) de protection contre les erreurs de remplissage de réservoir selon la revendication 1,
**caractérisé en ce que**
l'élément de fermeture (9) présente au niveau de sa périphérie au moins trois pattes de fermeture (14) et le boîtier (2) présente au moins trois pattes de boîtier (8) associées aux pattes de fermeture (14).

3. Dispositif (1) de protection contre les erreurs de remplissage de réservoir selon la revendication 1 ou 2,
**caractérisé en ce que**
le boîtier (2) et l'élément de fermeture (9) disposé dans le boîtier (2) sont disposés coaxialement.

4. Dispositif (1) de protection contre les erreurs de remplissage de réservoir selon l'une quelconque des revendications 1 à 3,
**caractérisé en ce que**
le boîtier (2) est réalisé de manière sensiblement cylindrique, le boîtier (2) présentant une extrémité de boîtier côté réservoir (3), une extrémité de boîtier côté remplissage (4) et un espace interne de boîtier (5).

5. Dispositif (1) de protection contre les erreurs de remplissage de réservoir selon l'une quelconque des revendications 1 à 4,
**caractérisé en ce que**
l'élément de séparation (20) est disposé au niveau de l'extrémité de boîtier côté réservoir (3) et est réalisé de telle sorte que dans une position initiale de l'élément de séparation, une séparation de l'espace interne du boîtier (5) et d'un réservoir soit possible, de telle sorte que le remplissage du réservoir ne soit pas possible avec un pistolet de remplissage.

6. Dispositif (1) de protection contre les erreurs de remplissage de réservoir selon l'une quelconque des revendications précédentes,
**caractérisé en ce que**
l'élément de séparation (20) est réalisé sous forme de volet.

7. Dispositif (1) de protection contre les erreurs de remplissage de réservoir selon l'une quelconque des revendications précédentes,
**caractérisé en ce que**
l'élément de séparation (20) peut être déplacé dans une position ouverte par un pistolet de remplissage approprié.

8. Dispositif (1) de protection contre les erreurs de remplissage de réservoir selon l'une quelconque des revendications précédentes,
**caractérisé en ce que**
l'élément de fermeture (9) est réalisé sous forme essentiellement conique, en particulier en forme d'entonnoir, l'élément de fermeture (9) se rétrécissant dans la direction de l'extrémité du boîtier côté réservoir (3).

9. Dispositif (1) de protection contre les erreurs de remplissage de réservoir selon l'une quelconque des revendications précédentes,
**caractérisé en ce que**
l'élément de fermeture (9) présente plusieurs entailles (11), de sorte que l'élément de fermeture (9) soit divisé au moins en partie en plusieurs segments d'éléments de fermeture (13).

10. Dispositif (1) de protection contre les erreurs de remplissage de réservoir selon l'une quelconque des revendications précédentes,
**caractérisé en ce que**
l'élément de fermeture (9) est réalisé au moins en partie de manière élastique.

11. Dispositif (1) de protection contre les erreurs de remplissage de réservoir selon l'une quelconque des revendications précédentes,
**caractérisé en ce que**
la patte de fermeture (14) et la patte de boîtier (8) sont réalisées sous forme élastique.

12. Dispositif (1) de protection contre les erreurs de remplissage de réservoir selon l'une quelconque des revendications précédentes,
**caractérisé en ce**
**qu'**un élément de serrage élastique (19) est disposé au niveau de la périphérie extérieure du boîtier (6), l'élément de serrage (19) appliquant une force de rappel radiale à la patte de boîtier (8) de sorte qu'en l'absence d'un pistolet de remplissage approprié, la patte de boîtier (8) soit retenue dans une position initiale de patte de boîtier.

13. Dispositif (1) de protection contre les erreurs de remplissage de réservoir selon l'une quelconque des revendications précédentes,
**caractérisé en ce que**
la patte de boîtier (8) associée à la patte de fermeture (14) présente un dispositif d'encliquetage (18), la patte de fermeture (14) s'encliquetant en l'absence d'un pistolet de remplissage approprié de préférence au niveau d'une extrémité de patte de fermeture (15) dans le dispositif d'encliquetage (18) de la patte de boîtier associée (8) et de ce fait la connexion par encliquetage (17) étant réalisée.

14. Dispositif (1) de protection contre les erreurs de remplissage de réservoir selon l'une quelconque des revendications précédentes,
**caractérisé en ce que**
l'élément de fermeture (9) présente plusieurs éléments de glissement (10), les éléments de glissement (10) étant réalisés au niveau d'une périphérie extérieure de l'élément de fermeture (12) dans la direction du boîtier (2).

15. Dispositif (1) de protection contre les erreurs de remplissage de réservoir selon la revendication 14,
**caractérisé en ce que**
dans chaque cas un guide à coulisse axial est associé à un élément de glissement (10) au niveau d'une périphérie interne du boîtier (7), l'élément de glissement respectif (10) pouvant être guidé axialement dans le guide à coulisse respectif du boîtier (2).

16. Dispositif (1) de protection contre les erreurs de remplissage de réservoir selon la revendication 15,
**caractérisé en ce que**
le guide à coulisse est réalisé de telle sorte que les éléments de glissement (10) puissent être déplacés radialement vers l'extérieur et en particulier uniquement dans la région de l'extrémité de boîtier côté réservoir (3).

17. Dispositif (1) de protection contre les erreurs de remplissage de réservoir selon l'une quelconque des revendications précédentes,
**caractérisé en ce que**
dans la région de l'extrémité de boîtier côté réservoir (3) est disposé au moins un élément de ressort (21), l'élément de ressort (21) appliquant sur l'élément de fermeture (9) une force de rappel axiale, de sorte qu'en l'absence d'un pistolet de remplissage approprié, l'élément de fermeture (9) soit poussé dans une position initiale de l'élément de fermeture.

18. Dispositif (1) de protection contre les erreurs de remplissage de réservoir selon la revendication 17,
**caractérisé en ce que**
l'élément de ressort (21) est réalisé d'une seule pièce avec l'élément de séparation (20).
